# EUROPÄISCHE PATENTSCHRIFT

(11) **EP 0 463 286 B1**
(45) Veröffentlichungstag und Bekanntmachung des Hinweises auf die Patenterteilung: **31.08.1994**
(21) Anmeldenummer: 91100803.5
(22) Anmeldetag: 23.01.1991
(51) Int. Cl.: B29C 31/06

(54) **Verfahren zur gravimetrischen Erfassung des Verbrauchs an Material in Verarbeitungsmaschinen**
Method of gravimetric sensing the material consuption of processing machines
Procédé pour l'enregistrement gravimétrique de la consommation en matériel dans des machines à usiner

(30) Priorität: 27.06.1990 DE 4020394
(43) Veröffentlichungstag der Anmeldung: 02.01.1992
(73) Patentinhaber: FILTERWERK MANN & HUMMEL GMBH, D-71631 Ludwigsburg (DE)
(72) Erfinder: Brandauer, Otto, W-7130 Mühlacker (DE); Grassl, Klaus, W-7140 Ludwigsburg 11 (DE); Kosnopfl, Alfred, W-7961 Ebenweiler (DE); Schäfer, Werner, W-7000 Stuttgart 1 (DE); Wieland, Helmut, W-7140 Ludwigsburg (DE)
(74) Vertreter: Voth, Gerhard, Dipl.-Ing.

(56) Entgegenhaltungen:
- DE-A- 1 806 636
- DE-A- 3 820 281
- DE-B- 2 406 686

## Beschreibung

Die Erfindung betrifft ein Verfahren zum Fördern von Material in Verarbeitungsmaschinen.

Aus der den nächsten Stand der Technik bildenden DE 24 06 686 B2 ist eine Einrichtung zum wahlweisen Beschicken einer Anzahl von Extrudern aus einer Anzahl von Vorratsbehältern bekannt. Bei dieser Einrichtung sind sogenannte Wechselvorrichtungen vorgesehen, mit denen ein Umschalten der Materialleitungen möglich ist. Damit kann ein bestimmter Vorratsbehalter an einen bestimmten Extruder angeschlossen werden.

Ein Nachteil dieser Einrichtung ist darin zu sehen, daß eine Erfassung der Materialströme nicht möglich ist.

Ein Verfahren zur gravimetrischen Erfassung des Verbrauchs an Material in Verarbeitungsmaschinen ist beispielsweise aus der DE-OS 38 27 927 bekannt.

Verarbeitungsmaschinen, welche mit Schüttgütern zur weiteren Verarbeitung, Umwandlung oder Verpackung beschickt werden, finden sich in der Nahrungsmittel- und Kunststoffindustrie. Insbesondere in der kunststoffverarbeitenden Industrie müssen Spritzgießmaschinen und Extruder mit einem Schüttgut oder mit einer Mischung aus mehreren Schüttgütern bestückt werden. Häufig werden für diese Aufgabe pneumatisch arbeitende Einzelfördergeräte oder sogenannte Mehrstellenfördersysteme eingesetzt. Von Mehrstellenfördersystemen spricht man, wenn mehrere Verarbeitungsmaschinen mit separaten Förderstationen bestückt sind, diese aber an ein gemeinsames Gebläse angeschlossen werden. Es gibt dabei zahlreiche Variationsmöglichkeiten, die in der Regel aber alle im Saugsystem arbeiten.

Ziel solcher Fördereinrichtungen ist es, jede Verarbeitungsmaschine exakt mit der Menge Material zu versorgen, die sie für einen ungestörten Prozess benötigt. Die genaue Menge pro Zeiteinheit bzw. der Durchsatz über einen Schicht- oder Tageszeitraum ist damit von der Maschine bestimmt, ohne daß eine Registrierung möglich ist. Zwar wird in der oben genannten DE-OS 38 27 927 ein Fördersystem vorgestellt, mit dem der Materialverbrauch registriert werden kann. Der Nachteil dieses Systems liegt jedoch darin, daß einerseits aufgrund des einzigen Vorratsbehälters nur eine Materialsorte registriert werden kann. Andererseits durch die Anordnung des Absaugrohres keine restlose Entleerung des Absaugbehälters gewährleistet ist. Außerdem bleibt bei zyklisch arbeitenden Mehrstellenfördersystemen eine unregelmäßige Restmenge im Förderrohrsystem liegen, sodaß eine exakte Bestimmung des einer Maschine zugeführten Materialgewichts nicht möglich ist.

Im übrigen ersetzt dieses System nur die bekannten Schüttwaagen mit all ihren Nachteilen.

Der Erfindung liegt deshalb die Aufgabe zugrunde, ein Verfahren und ein Fördersystem für Mehrstellenbeschickungsanlagen zu schaffen, welches in der Lage ist, unter Vermeidung der genannten Nachteile, die Menge an Material zu ermitteln, die die Maschine in einem bestimmten Zeitraum zur Verarbeitung zugeführt bekommen hat, und andererseits ermöglicht, daß verschiedene Materialien in einem definierten Gewichtsverhältnis der Maschine zugeführt werden können.

Diese Aufgabe wird gemäß den Merkmalen des Hauptanspruchs gelöst.

Ein wesentlicher Vorteil der Erfindung ist darin zu sehen, daß ein aufwendiges Steuer- und Rechnersystem pro Förderstation nicht erforderlich ist, sondern über ein zentrales Rechnersystem, welches eine einzige Auswerteeinheit besitzt, sämtliche Einzelförderstationen gravimetrisch erfasst werden können. Ausgestaltungen der Erfindung und vorteilhafte Weiterbildungen sind in den Unteransprüchen enthalten.

Die Erfindung wird nachfolgend anhand der in den Zeichnungen dargestellten Figuren näher erläutert. Es zeigt:
- Figur 1: eine konventionelle Mehrstellenbeschickungsanlage,
- Figur 2: eine Mehrstellenbeschickungsanlage mit einem zentralen Rechnersystem, zur gravimetrischen Durchsatzerfassung,
- Figur 3: ein erweitetes System zur Förderung verschiedener Materialsorten zu einer Verarbeitungsmaschine.

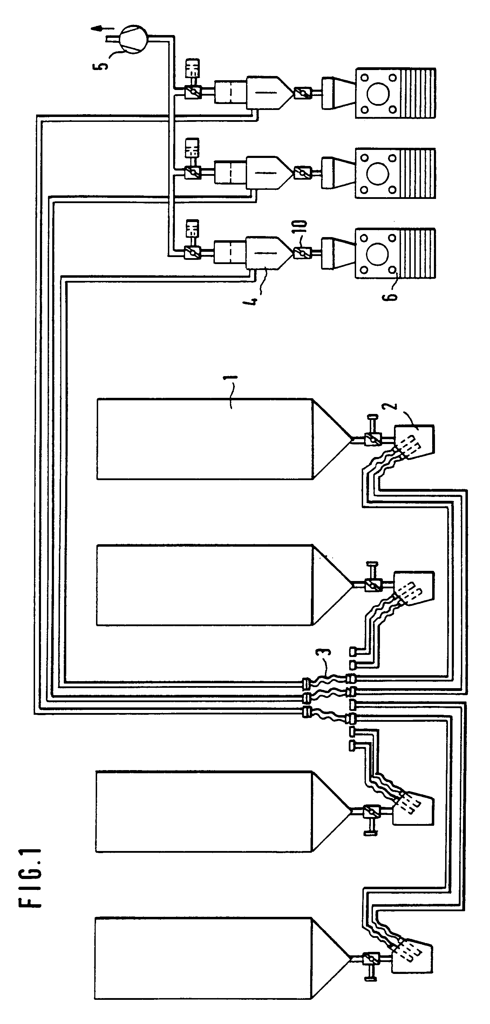

Die übliche Ausführung einer Mehrstellenbeschickungsanlage zeigt Figur 1. Darin ist zu erkennen, daß die Fördergeräte 4 der gezeigten drei Spritzgießmaschinen 6 an ein beliebiges Material-Lagersilo 1 angekuppelt werden können und über ein Saugfördergebläse 5, mit der Menge Material versorgt werden, welche dem Durchsatz der Spritzgießmaschinen 6 entspricht. Die Steuerung des Materialdurchsatzes erfolgt über die selbsttätig schließende Bodenklappe 10 der Fördergeräte 4. Diese Bodenklappe 10 ist mit einem Gegengewicht ausgerüstet und schließt immer dann, wenn der Schüttpegel des im Materialtrichter befindenden Schüttgutes soweit abgesunken ist, daß sich die Bodenklappe frei bewegen kann. Über einen Endschalter wird der Zustand "Klappe geschlossen" der Steuerung übermittelt und dadurch ein neuer Förderzyklus eingeschaltet. Durch diese Einrichtung ist gewährleistet, daß über einen gewissen Zeitraum gesehen, die Verarbeitungsmaschinen mit der richtigen Materialmenge versorgt werden. Damit ist eine störungsfreie Versorgung der Maschine mit Material gewährleistet, eine Registrierung der durchgesetzten Materialmenge erfolgt jedoch nicht. Ein Fördersystem für Mehrstellenbeschickungsanlagen sollte auch in der Lage sein, die Menge an Material zu ermitteln, die die Maschine in einem bestimmten Zeitraum zur Verarbeitung zugeführt bekommen hat.

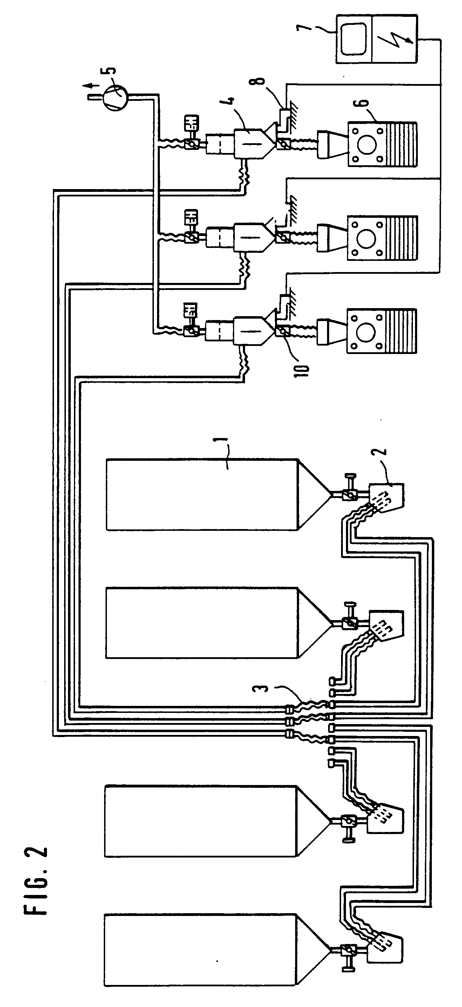

Eine solche Anlage zeigt Figur 2. Hierbei ist zu erkennen, daß die einzelnen Fördergeräte 4 auf sogenannten Wägezellen 8 befestigt sind. Diese Wägezellen arbeiten nach dem Prinzip eines DMS-Systems und liefern ein analoges Meßsignal entsprechend dem einwirkenden Gewicht an die zentrale Steuerung 7. Die Wägezellen 8 sind speziell für die Aufnahme exzentrischer Lasten ausgebildet. Da im Fördersystem ein Fördergerät nach dem anderen über das entsprechende Förderventil mit dem Sauggebläse verbunden wird, ist es möglich, mit einer einzigen Auswerteelektronik im Muliplexsystem immer nur die Wägezelle 8 aufzuschalten, die für die Förderung aktuell ist, das heißt in welche gerade Material eingefüllt wird. Damit kann nach einer definierten Gewichtszunahme des Fördergeräts 4 die Förderung abgeschaltet, und das in dem Fördergerät befindliche Material gemessen werden, bevor es über die selbsttätig arbeitende Bodenklappe 10 ausfliest. Somit kann für jede Maschine der Materialdurchsatz pro Zeiteinheit bestimmt werden und der Materialverbrauch, der in einem Silo 1 befindlichen Materialsorte, über einen längeren Zeitraum bilanziert werden. Außerdem kann, wenn während des Fördervorgangs die Gewichtszunahme pro Zeiteinheit gegen Null geht, eine Störung im Fördersystem von der Steuerung erkannt werden.

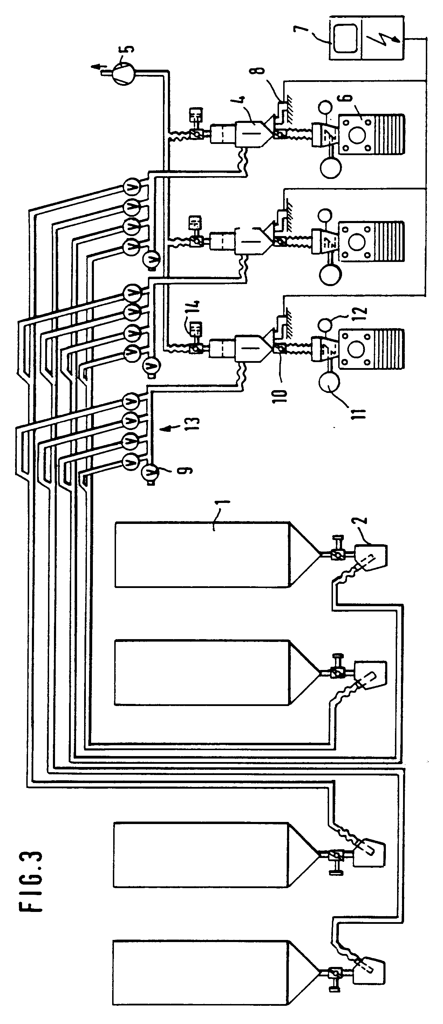

Desweiteren ist es möglich, mit einem erweiterten System, wie es Figur 3 zeigt, verschiedene Materialsorten in definierter Menge über ein Fördergerät zu einer Verarbeitungsmaschine zu transportieren. Da pro Förderzyklus die Gewichtsverhältnisse der Materialien konstant gehalten werden, ist es nur noch notwendig, die verschiedenen Materialien untereinander zu mischen, sodaß die Spritzgießmaschinen 6 mit einem gravimetrisch gemessenen Verhältnis unterschiedlicher Materialien beschickt werden können. Während des Umschaltens von einer Materialsorte auf die andere, wird das im Förderventilblock 13 angebaute Leersaugventil 9 geöffnet, sodaß die vom Saugfördergebläse 5 angesaugte Luft ausschließlich über dieses Ventil abgesaugt wird. Damit wird erreicht, daß sowohl das Förderrohrsystem stromabwärts der eigentlichen Förderventile 13 restlos geleert wird, und andererseits, bedingt durch den verengten Querschnitt des Leersaugventiles 9, ein Mindestunterdruck in dem Fördergerät aufrechterhalten bleibt, der die Bodenplatte 10 des Fördergeräts 4 am Öffnen hindert.

Wenn alle Komponenten einer Charge sich in dem Fördergerät 4 befinden und sämtliche Teilgewichte und das Endgewicht registriert sind, wird in bekannter Weise das Fördergerät 4 über ein Förderventil 14 abgeschaltet. Nun kann über das Leersaugventil 9 ein Druckausgleich zur Atmosphäre erfolgen und das Fördergerät 4 in üblicher Weise entleeren. Die innerhalb einer Charge gewichtsgenau dosierten Einzelkomponenten müssen nun in einem im Maschinentrichter befindlichen Mischer 11 untereinander vermischt werden.

Selbstverständlich können die Maschinen 6 unterschiedliche Rezepturen verarbeiten, die über einen Zentralrechner 7 vorgegeben und verwaltet werden. Der Rechner 7 kann auch die gesamte Bilanzierung und Durchsatzermittlung der Materialien vornehmen.

Durch einen im Maschinentrichter der Spritzgießmaschine 6 eingebauten Füllhöhensensor 12 wird gewährleistet, daß das Fördersystem nur dann aktiv wird, wenn durch diesen Füllhöhensensor 12 gemeldet wird, daß genügend Raum im Maschinentrichter vorhanden ist, um eine definierte Charge eines Förderzykluses aufzunehmen. Damit wird garantiert, daß das flexibel mit dem Maschinentrichter verbundene Fördergerät restlos entleert werden kann und die sogenannte Null-Stellung des Systems erreicht wird.

Die Steuerung 7 bzw. der Rechner ist beispielsweise eine freiprogrammierbare Steuerung. Die Messtellenabfrage erfolgt mit einem Multiplexer derart, daß die Fördergeräte 4 zunächst von der Steuerung 7 über den Multiplexer auf Leermeldung abgefragt werden. Steht bei dem abgefragten Fördergerät 4 eine Leermeldung an, und der Klappensensor meldet eine geschlossene Klappe, wird der Förderzyklus für das entsprechende Gerät 4 eingeleitet. Nach Beendigung der Förderung erfolgt für die Datenselektierung eine kurze Beruhigungszeit, bis die Daten vom Multiplexer in den Rechner übergeben wurden. Ist die Datenübergabe abgeschlossen, wird durch Schließen des Förderventils 14 die Verschlußklappe des Fördergeräts, also die Bodenklappe 10, zum Öffnen freigegeben und das Material kann in den Maschinenvorratsbehälter übergeben werden. Danach kann eine Filterreinigung des in dem Fördergerät 14 befindlichen Luftfilters durchgeführt werden. Nach Freiwerden der Bodenklappe 10 von Fördergut kann diese wieder, wie oben beschrieben, schließen. Nach erfolgter Datenübergabe wird sofort die nächste Förderstation die förderbereit ist, wie oben beschrieben, unter Aufschaltung der entsprechenden Wägezelle 8 über den Multiplexer befüllt. Die Daten werden von der Steuerung 7, beispielsweise an einen PC, welcher an die Steuerung 7 angeschlossen ist, zur Weiterverarbeitung übergeben. In diesem PC können alle Maschinendaten, Schichtprotokolle usw. abgespeichert werden. Entsprechend der Datenvorgaben, wie beispielsweise Behältergröße, Materialcode, spezifisches Gewicht und Materialvolumen kann das optimale Erfassungsvermögen jedes Fördergeräts automatisch bestimmt werden.

Zweckmäßigerweise gelangt ein Drucker an dem PC zum Einsatz welcher auch für den Ausdruck der Bilanzen verwendet werden kann. Mit einer entsprechenden Steuerung 7 können mehrere gravimetrische Förderlinien gesteuert werden. Die Kapazität für die Verwaltung mehrerer Förderlinien ist dabei lediglich vom Adressbereich der Steuerung sowie deren Verarbeitungsgeschwindigkeit abhängig.

## Patentansprüche

1. Verfahren zur Zuführung von Material in Verarbeitungsmaschinen (6), wobei diese Verarbeitungsmaschinen (6) aus mehreren Materiallagerbehältern (1) beschickt werden und die Beschickung von einem zentralen Rechner- und Steuersystem (7) geschaltet wird, dadurch gekennzeichnet, daß eine gravimetrische Erfassung des Verbrauchs an Material erfolgt, wobei Einzelförderstationen (4) vorgesehen sind, die flexibel an einer Wägezelle (8) befestigt sind und diese abwechselnd auf ein einziges Auswertesystem innerhalb des Steuersystems (7) im Muliplexverfahren aufgeschaltet werden.

2. Verfahren nach Anspruch 1 dadurch gekennzeichnet, daß jede Einzelförderstation (4) zyklisch mit einer oder mit verschiedenen Materialarten in vorbestimmten Gewichtsmengen beschickt werden.

3. Verfahren nach einem der vorherigen Ansprüche dadurch gekennzeichnet, daß jede Förderstation (4) mit einem zusätzlichen Leersaugventil (9) mit verengtem Querschnitt ausgerüstet ist.

4. Verfahren nach einem der vorherigen Ansprüche dadurch gekennzeichnet, daß über einen Grenzwert in der Gewichtszunahme pro Zeiteinheit eine Störung im Fördersystem von der Steuerung (7) erkannt wird.

5. Verfahren nach einem der vorherigen Ansprüche dadurch gekennzeichnet, daß über das Steuersystem (7) sowohl für jede Förderstation (4) einzelner Rezepturen vorgegeben, als auch separat der Durchsatz für jede Förderstation (4) pro Zeiteinheit ermittelt werden kann, und eine gesamte Bilanz aller verbrauchten Materialien durchführbar ist.

6. Verfahren nach einem der vorherigen Ansprüche dadurch gekennzeichnet, daß jede Förderstation (4) mit einem Füllstandsmelder ausgerüstet ist, welcher die Abschaltung der Förderung einleitet, und das Wägesystem (8) zur Gewichtsregistrierung der volumetrisch bestimmen Charge dient.

7. Verfahren nach einem der vorherigen Ansprüche dadurch gekennzeichnet, daß der Förderzyklus für jede Förderstation (4) über eine einstellbare Förderzeit gesteuert wird, und das Wägesystem (8) zur Gewichtsregistrierung, der in dieser Zeit geförderten Charge, dient.

## Claims

1. Method of feeding material to processing machines (6), which processing machines (6) are charged from a plurality of material storage vessels (1), the charging being controlled by a central computing and control system (7), characterised in that a gravimetric determination of the consumption of material is effected, individual conveyor stations (4) being provided which are flexibly mounted on a weighing cell (8) and are alternately switched to a single evaluation system internally of the control system (7) by a multiplex process.

2. Method according to claim 1, characterised in that each individual conveyor station (4) is cyclically charged with one type of material or with various types of material in predetermined weight quantities.

3. Method according to one of the preceding claims, characterised in that each conveyor station (4) is provided with an additional no-load suction valve (9) of reduced cross-section.

4. Method according to one of the preceding claims, characterised in that a fault in the conveyor system is recognised by the control system via a limit value in the increase in weight per unit of time.

5. Method according to one of the preceding claims, characterised in that individual samples are predetermined via the control system (7) for each conveyor station (4), and the charge for each conveyor station (4) can also be separately determined per unit of time, and a total balance of all of the consumed materials can be effected.

6. Method according to one of the preceding claims, characterised in that each conveyor station (4) is provided with a filling level indicator, which initiates switching-off of the conveyor process, and the weighing system (8) serves to record the weight of the volumetrically determined charge.

7. Method according to one of the preceding claims, characterised in that the conveyor cycle for each conveyor station (4) is controlled over an adjustable conveyor period, and the weighing system (8) serves to record the weight of the charge conveyed in this time.

## Revendications

1. Procédé pour fournir des matériaux à des machines d'usinage (6), ces machines (6) étant alimentées à partir de plusieurs réceptacles de stockage de matériau (1) et l'alimentation étant commutée par un système central de calcul et de commande (7), procédé caractérisé en ce qu'on fait une détection gravimétrique de la consommation en matière, différents postes d'alimentation distincts (4) étant prévus qui sont fixés de manière souple à des cellules de pesée (8) et celles-ci sont mises en oeuvre en alternance sur un seul système d'exploitation à l'intérieur du système de commande (7) selon un procédé en multiplex.

2. Procédé selon la revendication 1, caractérisé en ce que chaque poste de transfert (4), séparé est alimenté en quantités pondérales prédéterminées d'un type de matière ou de différents types de matière.

3. Procédé selon l'une des revendications précédentes, caractérisé en ce que chaque poste d'alimentation (4) est équipé d'une soupape d'aspiration à vide (9), supplémentaire, à section réduite.

4. Procédé selon l'une des revendications précédentes, caractérisé en ce qu'au-delà d'une valeur limite de l'augmentation de poids par unité de temps, la commande (7) reconnaît qu'il y a un incident dans le système de transfert.

5. Procédé selon l'une des revendications précédentes, caractérisé en ce que le système de commande (7) permet de déterminer à la fois pour chaque poste de transfert (4) des compositions séparées, prédéterminées et aussi séparément le débit de chaque poste de transfert (4) par unité de temps et on effectue un bilan total de toutes les matières consommées.

6. Procédé selon l'une des revendications précédentes, caractérisé en ce qu'on équipe chaque poste de transfert avec un élément de signalisation de niveau de remplissage qui commande la coupure du transfert et le système de pesée (8) sert à l'enregistrement du poids de la charge déterminée de manière volumétrique.

7. Procédé selon l'une des revendications précédentes, caractérisé en ce que le cycle de transfert de chaque poste de transfert (4) est commandé sur un temps de transfert réglable et le système de pesée (8) sert à l'enregistrement pondéral de la charge transférée pendant ce temps.
